# EUROPÄISCHE PATENTSCHRIFT

(11) **EP 2 784 895 B1**
(45) Veröffentlichungstag und Bekanntmachung des Hinweises auf die Patenterteilung: **23.03.2016**
(21) Anmeldenummer: 14001235.2
(22) Anmeldetag: 03.04.2014
(51) Int. Cl.: H02J 1/14

(54) **Steuervorrichtung für ein Energieverteilungssystem und Verfahren zur Steuerung eines Energieverteilungssystems**
Control device for an energy distribution system and method for controlling an energy distribution system
Dispositif de commande pour un système de distribution d'énergie et procédé de commande d'un système de distribution d'énergie

(43) Veröffentlichungstag der Anmeldung: 01.10.2014
(73) Patentinhaber: ABB Technology AG, 8050 Zürich (CH)
(72) Erfinder: Schader, Andreas, 63225 Langen (DE); Bauer, Reinhard, Dr., 69126 Heidelberg (DE); Klose, Silke, 64283 Darmstadt (DE); Subbiah, Subanatarajan, Dr., 68309 Mannheim (DE)
(74) Vertreter: Kock, Ina

(56) Entgegenhaltungen:
- EP-A1- 1 511 150
- EP-A2- 0 563 790
- DE-A1- 19 955 406

## Beschreibung

Die Erfindung betrifft eine Steuervorrichtung für ein Energieverteilungssystem welches derart beschaffen ist, dass es einen Anschluss an ein Wechselstromversorgungssystem sowie eine Mehrzahl an vorgegebenen Lasten mit Energiespeicherfähigkeit umfasst, welche bedarfsweise jeweils mittels einer jeweiligen Schaltvorrichtung elektrisch für die Dauer einer Halbwelle oder einem ganzzahligen Vielfachen davon mit dem Wechselstromversorgungssystem verbindbar sind und im Verbindungsfall mit ihrer Nennleistung betrieben werden, wobei die Steuervorrichtung dafür vorgesehen ist, die jeweiligen Schaltvorrichtungen derart anzusteuern, dass die jeweiligen Lasten für einen jeweiligen Ansteuerzeitraum innerhalb eines vorgegebenen gemeinsamen Zykluszeitraumes mit einer jeweiligen im zeitlichen Mittel vorgegebenen Menge an elektrischer Energie aus dem Wechselstromversorgungssystem versorgt werden und wobei die Steuervorrichtung dafür vorgesehen ist, Beginn und Ende der jeweiligen Ansteuerzeiträume innerhalb des gemeinsamen Zykluszeitraumes vor dessen Beginn derart festzulegen, dass während des Zykluszeitraums die elektrische Belastung des Wechselstromversorgungssystems durch die Lasten auf einen möglichst konstanten Verlauf optimiert ist.

Es ist allgemein bekannt, dass elektrische Energie nicht ohne größeren Aufwand speicherbar ist und deshalb in genau dem Moment erzeugt werden muss, in dem sie von den Abnehmern verbraucht wird. Je genauer der Verbrauch vorab bestimmt werden kann, desto besser kann die Erzeugung geplant werden und desto weniger Reserveleistung muss vorgehalten werden. Je langfristiger die Planung der Erzeugung elektrischer Energie ist, desto besser lässt sich diese durchführen. Während sich eine Einsatzplanung beispielsweise von Kohlekraftwerken gut für einen Tag im Voraus durchführen lässt, ist dies in einem kurzfristigen Bereich von beispielsweise einigen 100s praktisch nicht durchführbar. Daher ist es wünschenswert, dass Lasten gerade in diesem kurzfristigen Bereich so wenige unkalkulierbare Schwankungen wie möglich aufweisen, also der Belastungsverlauf innerhalb eines kurzfristigen Zeitraums auf einen möglichst konstanten Wert optimiert ist.

Es ist auch bekannt, dass in industriellen Energieverteilungsnetzen häufig Lasten mit einer Energiespeicherfähigkeit zum Einsatz kommen, beispielsweise elektrothermische Öfen. Eine Energiespeicherung erfolgt hier in Form von thermischer Energie, welche in gewissen Grenzen, beispielsweise in einem Zykluszeitraum von einigen 100s, eine zeitliche Flexibilität bei der Zuführung elektrischer Energie ermöglichen. Hierbei wird eine Last innerhalb des Zykluszeitraums je nach im Mittel zuzuführender Energie für einen Ansteuerzeitraum mit ihrer Nennleistung betrieben und für den Rest des Zykluszeitraums ausgeschaltet. Bei geeigneter Festlegung der Ansteuerzeiträume innerhalb des Zykluszeitraums lässt sich der summarische Verbrauch einer Mehrzahl an Lasten entsprechend gleichmäßiger gestalten. Ein entsprechendes Beispiel für ein derartiges Vorgehen ist beispielsweise in der Patenschrift EP 0563790 A2 beschrieben.

Als nachteilig erweist sich hierbei, dass sich trotz einer Optimierung der Lastverteilung häufig eine unerwünschte Ungleichmäßigkeit des summarischen Belastungsverlaufes über einen Zykluszeitraum ergibt und dass eine Optimierungsberechnung gegebenenfalls eine längere Zeitdauer erfordert.

Ausgehend von diesem Stand der Technik ist es Aufgabe der Erfindung, eine Steuervorrichtung bereitzustellen, welche eine weiter verbesserte Lastverteilung ermöglicht. Aufgabe der Erfindung ist es auch, ein entsprechendes Verfahren anzugeben. Diese Aufgabe wird gelöst durch eine Steuervorrichtung der eingangs genannten Art. Diese ist dadurch gekennzeichnet, dass die Steuervorrichtung fernerhin dafür vorgesehen ist, im Rahmen der Optimierung für wenigstens eine Last anstelle eines zusammenhängenden Ansteuerzeitraums wenigstens zwei nicht-zusammenhängende Blockzeiträume gleicher Gesamtdauer festzulegen und zu berücksichtigen.

Die Grundidee der Erfindung besteht darin, abweichend vom Stand der Technik innerhalb eines Zykluszeitraumes anstelle eines einzigen Ansteuerzeitraumes vorgegebener Dauer, welche sich aus der im Mittel zuzuführenden elektrischen Leistung ergibt, mehrere Blockzeiträume gleicher summarischer Länge vorzusehen. Dies ist ermöglicht durch die Energiespeicherfähigkeit der Lasten, wodurch deren Ansteuerzeitraum innerhalb eines Zykluszeitraums sowohl geteilt als auch verschoben werden kann. Zykluszeiträume dauern typischer Weise nicht mehr als einige 100s. Es können beispielsweise mechanische, thermische oder elektrische Energie gespeichert werden. Hierdurch ergibt sich eine zusätzliche Flexibilität bei der Aufteilung der verschiedenen Lasten im Rahmen des Optimierungsvorgangs. Ganz allgemein sind als Lasten mit Energiespeicherfähigkeit diejenigen Lasten zu sehen, deren Ansteuerzeitraum im Zykluszeitraum frei wählbar ist. Die Anzahl von Lasten in einem Energieverteilungsnetz beträgt beispielsweise 20 bis 100, wobei deren jeweilige Leistung beispielsweise in einem Bereich von einigen kW bis über 1 MW liegt.

Als Ziel der Optimierung ist ein möglichst konstanter summarischer Belastungsverlauf aller Lasten über den Zykluszeitraum anzusehen. Hierunter ist auch eine Minimierung des Maximalverbrauches, also eine Elimination von Lastspitzen, zu verstehen.

Diese Flexibilität sei anhand eines exemplarischen Beispiels einer Optimierung erläutert, welche für einen Zykluszeitraum von beispielsweise 1 s bis einigen 100s erfolgen kann. Die jeder Last im Mittel über den Zykluszeitraum zuzuführende Leistung ist bekannt und ergibt sich beispielsweise produktionstechnischen Erfordernissen. Hieraus wird zunächst ein jeweiliger erforderlicher Ansteuerzeitraum bestimmt, für welchen die jeweilige Last innerhalb des Zykluszeitraums anzuschalten ist, wobei die Lage des Ansteuerzeitraums zunächst noch nicht bestimmt ist.

In einem nachfolgenden Schritt werden die Lasten in eine Reihenfolge gebracht, in welcher diese bei der Optimierung zu berücksichtigen sind. Hier bietet es sich beispielsweise an, Lasten mit einem hohen Energiebedarf höher zu priorisieren. Der Einschaltzeitpunkt des Ansteuerzeitraumes der am höchsten priorisierten Last wird an den Anfang des Zykluszeitraums gelegt. Nachfolgend wird im unmittelbaren Anschluss an das Ende dieses Ansteuerzeitraums der Einschaltzeitpunkt des Ansteuerzeitraumes einer Last gelegt, welcher zeitlich noch in den restlichen Zykluszeitraum passt.

Hierbei wird vorzugsweise nach dem Festlegen des Einschaltzeitpunktes des Ansteuerzeitraums einer Last der summarische Belastungsverlauf aller bisher festgelegten Lasten gebildet und festgestellt, in welchem Zeitabschnitt des Zykluszeitraums sich ein 'Belastungstal' befindet. Als nächstes wird der Einschaltzeitpunkt des Ansteuerzeitraums einer Last bestimmt, welcher geeignet ist, das 'Belastungstal' zu füllen. Hierbei ergibt sich die Schwierigkeit, dass jeweils geeignete Ansteuerzeiträume idealerweise auch eine bevorzugte Dauer aufweisen, welche ermöglicht, ein 'Belastungstal' komplett zu füllen.

Durch Aufteilung eines Ansteuerzeitraumes vorgegebener Länge in mehrere Blockzeiträume gleicher summarischer Dauer bleibt einerseits die im Mittel einer Last zugeführte elektrische Leistung konstant, andererseits lässt sich die Dauer eines Blockzeitraumes frei wählen, so dass 'Belastungstäler' zielgenau mit einem in der Dauer angepassten Blockzeitraum zu füllen sind. Auf diese Weise lässt sich in vorteilhafter Weise ein weiter verbesserter Belastungsverlauf über den Zykluszeitraum erzielen. Zudem ist ein Ergebnis schneller zu erreichen, weil die Anzahl möglicher Lösungsvarianten mit hinreichend konstantem Belastungsverlauf größer ist.

Es ist jedoch eine Vielzahl weiterer Optimierungsmethoden denkbar, welche ebenfalls durch die Einführung von Blockzeiträumen verbessert werden.

In diesem Zusammenhang sei angemerkt, dass im Rahmen dieser Anmeldung der Begriff 'Optimierung' nicht im streng mathematischen Sinne zu verstehen ist, nämlich dass die beste aller möglichen Lösungen zu finden ist. Vielmehr ist jede Lösung, welche einen zu definierenden hinreichend konstanten Belastungsverlauf aufweist als optimal anzusehen.

Die Ermittlung der jeweiligen Einschaltzeitpunkte erfolgt durch die Steuervorrichtung vor dem zeitlichen Beginn eines Zykluszeitraumes. Eine Steuervorrichtung ist eine Rechenvorrichtung mit einem Arbeitsspeicher, welche über entsprechende Interfacemöglichkeiten zur Ansteuerung beispielsweise der Schaltvorrichtungen verfügt. Vorzugsweise ist auch eine Kommunikationsvorrichtung vorgesehen, mittels welcher beispielsweise eine Parametrierung der Steuervorrichtung ermöglicht ist. Im Speicher der Steuervorrichtung ist ein entsprechendes Programmprodukt vorgesehen, mittels welchem die Optimierung durchgeführt wird. Nach Abschluss der Optimierung erfolgt ab Beginn des Zykluszeitraumes durch die Steuervorrichtung eine Ansteuerung der Schaltvorrichtungen entsprechend den ermittelten Zeiträumen.

Die Schaltvorrichtungen ermöglichen eine direkte Verbindung beziehungsweise eine komplette Trennung einer Last vom Wechselstromversorgungsnetz für die Dauer von wenigstens einer Halbwelle beziehungsweise einer halben Periodenlänge. Bei einer Netzfrequenz von 50Hz ergibt sich die Dauer einer Halbwelle zu 10ms.

Gemäß einer besonders bevorzugten Variante der erfindungsgemäßen Steuervorrichtung ist diese dafür vorgesehen, bei der Festlegung von Blockzeiträumen zusätzliche Daten von der zugehörigen Last zu berücksichtigen, welche die Information beinhalten, ob und wie viele Blockzeiträume innerhalb des gemeinsamen Zykluszeitraumes für die jeweilige Last maximal zulässig sind.

Je nach Art der Last und deren Bedeutung in einem Produktionsprozess kann es sich als ungünstig erweisen, für diese eine Aufteilung eines Ansteuerzeitraumes in mehrere Blockzeiträume zu gestatten. Deshalb ist es erfindungsgemäß vorgesehen, der Steuervorrichtung zusätzliche Informationsdaten bereitzustellen und somit eine Last bei der Optimierung beispielsweise von der Blockbildung auszuschließen. Eine Bereitstellung der zusätzlichen Daten kann beispielsweise durch eine Eingabe eines entsprechenden Parameters in den Speicher der Steuervorrichtung erfolgen, derartige Daten können aber auch über einen Kommunikationskanal direkt von einer Kontrollvorrichtung einer jeweiligen Last bereitgestellt werden. Letzteres ist insbesondere dann von Vorteil, wenn sich die Randbedingungen für eine Last im Produktionsprozess ändern, beispielsweise beim Anheizen eines elektrischen Ofens verglichen mit seinem stationären Betrieb.

In vergleichbarer Weise ist es erfindungsgemäß auch vorgesehen, dass die zusätzlichen Daten von der jeweiligen Last die Information beinhalten, welche minimale Dauer eines Blockzeitraums für die jeweilige Last zulässig ist. Je nach Art der Last und deren Bedeutung in einem Produktionsprozess kann sich ein Unterschreiten einer minimalen Dauer eines Blockzeitraumes als ungünstig erweisen, beispielsweise unterhalb eines Wertes von 100ms. Ein derartiges Unterschreiten wird auf diese Weise beim Optimierungsprozess in vorteilhafter Weise unterbunden.

Gemäß einer besonders bevorzugten Variante der erfindungsgemäßen Steuervorrichtung ist diese dafür vorgesehen, Ansteuerzeiträume beziehungsweise Blockzeiträume für eine Vielzahl an aufeinander folgenden Zykluszeiträumen festzulegen und anzuwenden. Somit ist ein kontinuierlicher Betrieb der Steuervorrichtung beziehungsweise des von diesem gesteuerten Energieverteilungsnetzes gewährleistet.

Entsprechend einer weiteren erfindungsgemäßen Variante der Steuervorrichtung ist diese dafür vorgesehen, bei aufeinander folgenden Zykluszeiträumen für eine jeweilige Last unterschiedliche vorgegebene Mengen an elektrischer Energie zu berücksichtigen. Eine derartige dynamische Anpassung der Vorgabeparameter ist insbesondere bei sich dynamisch ändernden Produktionsprozessen von Vorteil. Ebenso kann vorgesehen sein, die Länge zweier aufeinanderfolgender Zykluszeiträume jeweils dynamisch anzupassen, beispielsweise einen ersten Zykluszeitraum mit einer Länge von 50s vorzusehen und den darauffolgenden Zykluszeitraum mit einer Länge von 75s.

Gemäß einer besonders bevorzugten Ausgestaltungsvariante der erfindungsgemäßen Steuervorrichtung ist diese dafür vorgesehen, halbleiterbasierte Schaltvorrichtungen anzusteuern, insbesondere thyristorbasierte Schaltvorrichtungen. Thyristoren sind von ihrem Schaltverhalten in hervorragender Weise geeignet, jeweils komplette Halbwellen der Spannung des Wechselstromversorgungsnetzes durchzuschalten beziehungsweise zu blockieren.

Die Aufgabe der Erfindung wird auch gelöst durch ein Verfahren zur Steuerung eines Energieverteilungssystems, welches derart beschaffen ist, dass es einen Anschluss an ein Wechselstromversorgungssystem sowie eine Mehrzahl an vorgegebenen Lasten mit Energiespeicherfähigkeit umfasst, welche bedarfsweise jeweils mittels einer jeweiligen Schaltvorrichtung elektrisch für die Dauer einer Halbwelle oder einem ganzzahligen Vielfachen davon mit dem Wechselstromversorgungssystem verbindbar sind und im Verbindungsfall mit ihrer Nennleistung betrieben werden, umfasst, beinhaltend folgende Schritte:
- Bereitstellung der Dauer eines jeweiligen Zykluszeitraumes von 1 s bis einigen 100s,
- Bestimmung einer jeweils vorgegebenen Menge an elektrischer Energie mit welcher jede der Lasten im Mittel über den Zykluszeitraum aus dem Wechselstromversorgungssystem zu versorgen ist,
- Ermittlung der daraus resultierenden Dauer eines jeweiligen Ansteuerzeitraumes für jede der Lasten,
- iterative Optimierung des Beginns der jeweiligen Ansteuerzeiträume innerhalb des Zykluszeitraumes hinsichtlich eines möglichst konstanten Verlaufes der elektrische Belastung des Wechselstromversorgungssystems durch die Lasten,
- Ansteuerung der Schaltvorrichtungen entsprechend optimiertem Beginn und Dauer der Ansteuer- beziehungsweise Blockzeiträume ab zeitlichem Beginn des Zykluszeitraumes,
dadurch gekennzeichnet,
dass bei der iterativen Optimierung die Möglichkeit der Substitution eines Ansteuerzeitraumes durch mehrere summarisch gleich lange Blockzeiträume berücksichtigt ist und dass in diesem Fall Beginn und Dauer der jeweiligen Blockzeiträume bestimmt werden.

Die sich daraus ergebenden Vorteile einer verbesserten und beschleunigten Lastaufteilung wurden bereits im Rahmen der erfindungsgemäßen Steuervorrichtung, welche zur Durchführung zumindest der wesentlichen Schritte dieses Verfahrens vorgesehen ist, beschrieben.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches Energieverteilungssystem mit Steuervorrichtung,
- Fig. 2: ein Übersichtsbild für auftretende Zeiträume,
- Fig. 3: exemplarische Belastungsverläufe eines Wechselstromversorgungssystems,
- Fig. 4: einen exemplarischen Lastverlauf mit erfindungsgemäßer Optimierung und
- Fig. 5: einen exemplarischen Lastverlauf mit Optimierung gemäß dem Stand der Technik.

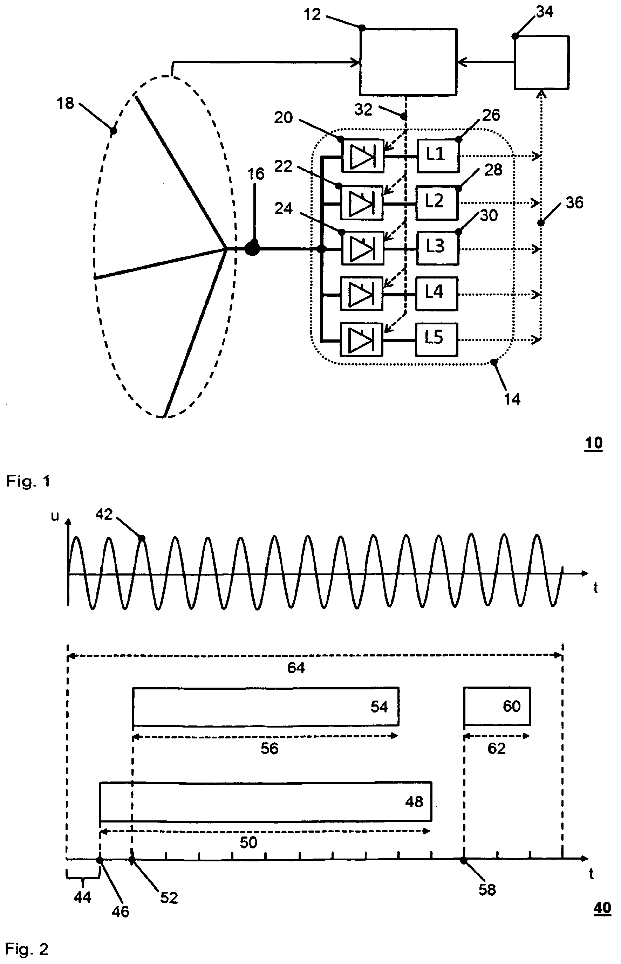

Fig. 1 zeigt ein exemplarisches Energieverteilungssystem 14 mit einer Steuervorrichtung 12 in einer schematischen Ansicht 10. Das Energieverteilungssystem weist mehrere Lasten 26, 28, 30 auf, beispielsweise elektrothermische Lasten oder auch Lasten mit einem elektrischen Energiespeicher, welche über eine jeweilige Schaltvorrichtung 20, 22, 24, beispielsweise einem Thyristorsteller, mittels eines elektrischen Anschlusses 16 mit einem elektrischen Versorgungsnetz 18 verbunden sind.

Die Steuervorrichtung 12 umfasst in diesem Fall eine Rechenvorrichtung, auf welcher ein Optimierungsprogrammprodukt installiert ist, sowie eine Kommunikationsschnittstelle, um über eine Steuerverbindung 32 eine lastoptimierte Ansteuerung der Schaltvorrichtungen 20, 22, 24 zu ermöglichen. Über die Kommunikationsschnittstelle werden der Steuervorrichtung 12 zudem aus einem Datenspeicher 34 zusätzliche Daten über die Lasten 26, 28, 30 bereitgestellt, welche diesem dynamisch über eine Datenverbindung 36 direkt von einer jeweiligen Kontrollvorrichtung der jeweiligen Lasten 26, 28, 30 zugeführt werden.

Fig. 2 zeigt ein Übersichtsbild 40 über erfindungsgemäß definierte Zeiträume. Im oberen Teil der Figur ist der sinusartige Spannungsverlauf 42 der Spannung eines Wechselstromversorgungsnetzes gezeigt, wobei sich bei einer Frequenz von 50Hz die Länge einer halbwelle zu 10ms ergibt.

Im unteren Teil der Figur ist eine Zeitachse t gezeichnet, welche eine Skalierung entsprechend der Dauer einer Netzperiode 44 mit zwei Halbwellen aufweist. Mit dem Pfeil mit der Bezugsziffer 64 ist die Dauer eines exemplarischen Zykluszeitraums von 15 Perioden, bei 50Hz also 300ms, angedeutet.

Ein Ansteuerzeitraum 48 beginnt 46 nach der ersten Netzperiode und dauert 10 Netzperioden wie mit dem Pfeil mit der Bezugsziffer 50 angedeutet. Im Rahmen eines erfindungsgemäßen Optimierungsprozesses kann dieser Ansteuerzeitraum 48 beispielsweise durch zwei summarisch gleich lange Blockzeiträume substituiert werden. Der erste Blockzeitraum 54 beginnt 52 beispielhaft nach der zweiten Netzperiode und dauert 56 acht Netzperioden und der zweite Blockzeitraum 60 beginnt 58 beispielhaft nach der dreizehnten Netzperiode und dauert 62 zwei Netzperioden. Summarisch ergibt sich für beide Varianten eine Dauer von zehn Netzperioden.

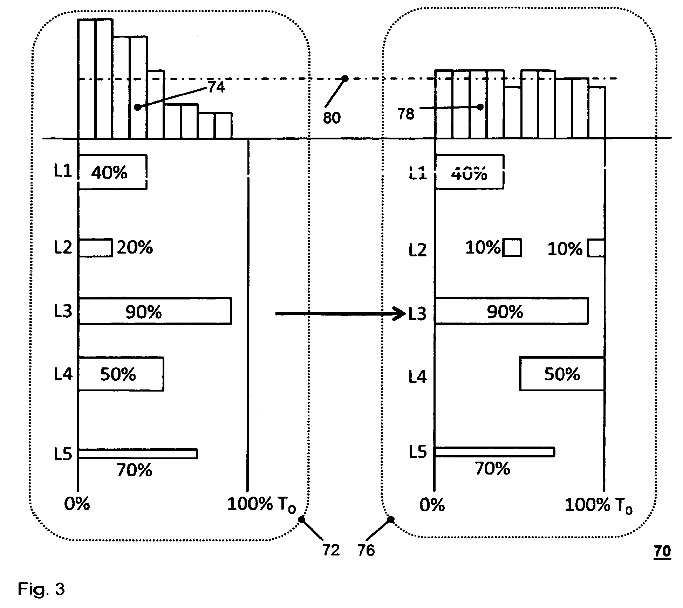

Die Fig. 3 zeigt exemplarische Belastungsverläufe eines Wechselstromversorgungssystems in einer Darstellung 70. Im linken Bereich mit der Bezugsziffer 72 sind exemplarische Lastverläufe ohne jegliche Optimierung dargestellt. Verschiedene Lasten L1, L2, L3, L4, L5 sind übereinander als Balken entsprechend ihrer betriebsbedingten Ansteuerzeit, welche in diesem Fall zwischen 20% und 70% der Länge T₀ des Zykluszeitraumes beträgt, dargestellt, wobei jeder Balken zunächst am Anfang des Zykluszeitraums beginnt, also keine Optimierung erfolgt ist. Die Dicke eines jeweiligen Balkens entspricht der Nennleistung der betreffenden Last, so dass die Fläche der Balken letztendlich ein Maß für den elektrischen Energiebedarf einer Last innerhalb des Zykluszeitraumes darstellt.

Die Flächen der Balken sind graphisch aufaddiert als Belastungsverlauf 74 ohne Optimierung gezeigt, wobei die senkrechten Linien übersichtshalber eine 10% Quantelung des Zykluszeitraumes darstellen. Es ist deutlich zu sehen, dass ohne Optimierung eine deutliche unerwünschte Schwankung des Belastungsverlaufes 74 um einen Mittelwert 80 erfolgt.

Im rechten Bereich mit der Bezugsziffer 76 sind exemplarische Lastverläufe mit Optimierung dargestellt. Die Anfangszeitpunkte der Ansteuerzeiträume der Lasten L1, L3, L4 und L5 beziehungsweise der diese repräsentierenden Balken sind im Rahmen eines Optimierungsprozesses angepasst worden, insbesondere ist hierbei der Anfangszeitraum der Last L4 um eine halbe Zykluszeit verschoben worden. Der Ansteuerzeitraum der Last L2 ist in zwei Blockzeiträume aufgeteilt worden, deren Beginn entsprechend verzögert wurde.

Der aufaddierte Belastungsverlauf 78 mit Optimierung zeigt nunmehr kaum noch Schwankungen um den Mittelwert 80. Es sei abermals darauf hingewiesen, dass eine Optimierung im Rahmen der Erfindung nicht als Optimierung in streng mathematischem Sinn aufzufassen ist.

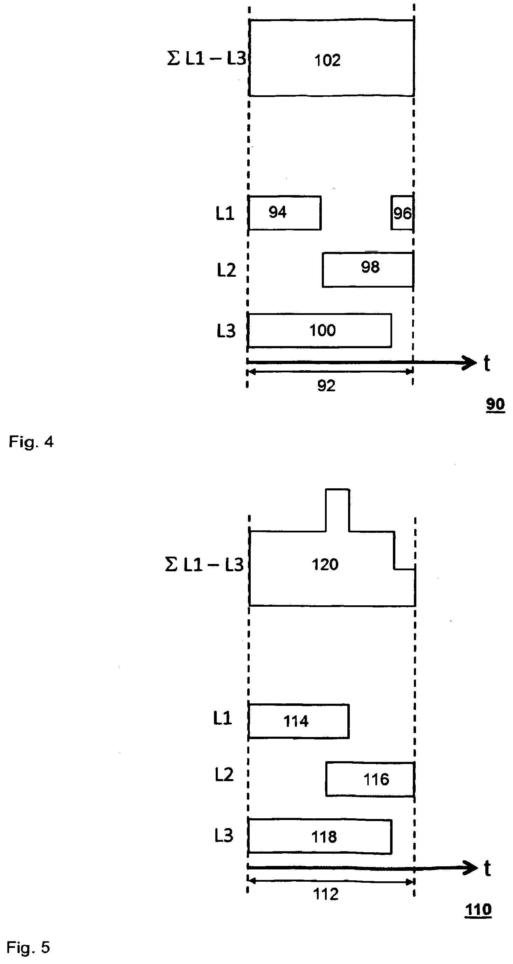

Fig. 4 zeigt einen exemplarischen Lastverlauf mit erfindungsgemäßer Optimierung in einer Darstellung 90. Innerhalb eines Zykluszeitraumes 92 sind für drei Lasten L1, L2, L3 zwei zugehörige Ansteuerzeiträume 98, 100 sowie zwei Blockzeiträume 94, 96 dargestellt, welche derart bestimmt sind, dass der sich als graphische Addition ergebende Belastungsverlauf 102 über den Zykluszeitraum 92 möglichst konstant ist, wobei sich in diesem Beispiel eine völlige Konstanz ergibt. Ohne eine Aufteilung der Blockzeiträume 94, 96 wäre ein derartiger konstanter Verlauf nicht möglich, wie in der nachfolgenden Figur gezeigt.

Fig. 5 zeigt einen exemplarischen Lastverlauf ohne erfindungsgemäße Optimierung in einer Darstellung 110. Innerhalb eines Zykluszeitraumes 112 sind für drei Lasten L1, L2, L3 drei zugehörige Ansteuerzeiträume 114, 116, 118 dargestellt, wobei der Ansteuerzeitraum der Last L1 gerade nicht in zwei summarisch gleich lange Blockzeiträume aufgeteilt wurde. Im Rahmen einer Optimierung ist es nicht möglich, eine Konstanz des Belastungsverlaufes 120 zu erreichen, aufgrund einer unvermeidbaren Überlappung der Ansteuerblöcke ist vielmehr eine unerwünschte Schwankung im Belastungsverlauf unvermeidbar.

### Bezugszeichenliste

- 10: exemplarisches Energieverteilungssystem mit Steuervorrichtung
- 12: Steuervorrichtung
- 14: Energieverteilungssystem
- 16: Anschluss
- 18: Wechselstromversorgungssystem
- 20: erste Schaltvorrichtung
- 22: zweite Schaltvorrichtung
- 24: dritte Schaltvorrichtung
- 26: erste Last
- 28: zweite Last
- 30: dritte Last
- 32: Steuerverbindung
- 34: Datenspeicher
- 36: Datenverbindung
- 40: Übersichtsbild Zeiträume
- 42: Spannungsverlauf Wechselstromversorgungsnetz
- 44: Netzperiode mit zwei Halbwellen
- 46: Beginn Ansteuerzeitraum
- 48: Ansteuerzeitraum
- 50: Dauer Ansteuerzeitraum
- 52: Beginn erster Blockzeitraum
- 54: erster Blockzeitraum
- 56: Dauer erster Blockzeitraum
- 58: Beginn zweiter Blockzeitraum
- 60: zweiter Blockzeitraum
- 62: Dauer zweiter Blockzeitraum
- 64: Zykluszeitraum
- 70: exemplarische Belastungsverläufe eines Wechselstromversorgungssystems
- 72: Lastverlauf und Belastungsverlauf ohne Optimierung
- 74: Belastungsverlauf ohne Optimierung
- 76: Lastverlauf und Belastungsverlauf mit Optimierung
- 78: Belastungsverlauf mit Optimierung
- 80: zeitliches Mittel der Belastung
- 90: exemplarischer Lastverlauf mit erfindungsgemäßer Optimierung
- 92: Zykluszeitraum
- 94: erster Blockzeitraum von Last L1
- 96: zweiter Blockzeitraum von Last L1
- 98: Ansteuerzeitraum von L2
- 100: Ansteuerzeitraum von L3
- 102: Belastungsverlauf über Zykluszeitraum
- 110: exemplarischer Lastverlauf mit Optimierung gemäß Stand der Technik
- 112: Zykluszeitraum
- 114: Ansteuerzeitraum von L1
- 116: Ansteuerzeitraum von L2
- 118: Ansteuerzeitraum von L3
- 120: Belastungsverlauf über Zykluszeitraum

## Patentansprüche

1. Steuervorrichtung (12) für ein Energieverteilungssystem (14)
• welches derart beschaffen ist, dass es einen Anschluss (16) an ein Wechselstromversorgungssystem (18) sowie eine Mehrzahl an vorgegebenen Lasten (26, 28, 30) mit Energiespeicherfähigkeit umfasst, welche bedarfsweise jeweils mittels einer jeweiligen Schaltvorrichtung (20, 22, 24) elektrisch für die Dauer einer Halbwelle oder einem ganzzahligen Vielfachen davon mit dem Wechselstromversorgungssystem (18) verbindbar sind und im Verbindungsfall mit ihrer Nennleistung betrieben werden,
• wobei die Steuervorrichtung (12) dafür vorgesehen ist, die jeweiligen Schaltvorrichtungen (20, 22, 24) derart anzusteuern, dass die jeweiligen Lasten (26, 28, 30) für einen jeweiligen Ansteuerzeitraum (48) innerhalb eines vorgegebenen gemeinsamen Zykluszeitraumes (64, 92, 112) *von 1s bis einigen 100s* mit einer jeweiligen im zeitlichen Mittel vorgegebenen Menge an elektrischer Energie aus dem Wechselstromversorgungssystem (18) versorgt werden,
• wobei die Steuervorrichtung (12) dafür vorgesehen ist, Beginn (46) und Ende der jeweiligen Ansteuerzeiträume (48) innerhalb des gemeinsamen Zykluszeitraumes (64, 92, 112) vor dessen Beginn derart festzulegen, dass während des Zykluszeitraums (64, 92, 112) die elektrische Belastung (74, 78 102, 120) des Wechselstromversorgungssystems (18) durch die Lasten (26, 28, 30) auf einen möglichst konstanten Verlauf optimiert ist,
**dadurch gekennzeichnet,**
**dass** die Steuervorrichtung (12) fernerhin dafür vorgesehen ist, bei der Optimierung für wenigstens eine Last (26, 28, 30) anstelle eines zusammenhängenden Ansteuerzeitraums (48) wenigstens zwei nicht-zusammenhängende Blockzeiträume (54, 60) gleicher Gesamtdauer festzulegen und zu berücksichtigen.

2. Steuervorrichtung nach Anspruch 1, **dadurch gekennzeichnet, dass** diese dafür vorgesehen ist, bei der Festlegung von Blockzeiträumen (54, 60) zusätzliche Daten von der zugehörigen Last (26, 28, 30) zu berücksichtigen, welche die Information beinhalten, ob und wie viele Blockzeiträume (54, 60) innerhalb des gemeinsamen Zykluszeitraumes (64, 92, 112) für die jeweilige Last (26, 28, 30) maximal zulässig sind.

3. Steuervorrichtung nach Anspruch 2, **dadurch gekennzeichnet, dass** die zusätzlichen Daten von der jeweiligen Last (26, 28, 30) die Information beinhalten, welche minimale Dauer eines Blockzeitraums (54, 60) für die jeweilige Last (26, 28, 30) zulässig ist.

4. Steuervorrichtung nach einem der vorherigen Ansprüche, **dadurch gekennzeichnet, dass** diese dafür vorgesehen ist, Ansteuerzeiträume (48) beziehungsweise Blockzeiträume (54, 60) für eine Vielzahl an aufeinander folgenden Zykluszeiträumen (64, 92, 112) festzulegen und anzuwenden.

5. Steuervorrichtung nach Anspruch 4, **dadurch gekennzeichnet, dass** diese dafür vorgesehen ist, bei aufeinander folgenden Zykluszeiträumen (64, 92, 112) für eine jeweilige Last (26, 28, 30) unterschiedliche vorgegebene Mengen an elektrischer Energie zu berücksichtigen.

6. Steuervorrichtung nach einem der vorherigen Ansprüche, **dadurch gekennzeichnet, dass** diese dafür vorgesehen ist, halbleiterbasierte Schaltvorrichtungen anzusteuern, insbesondere thyristorbasierte Schaltvorrichtungen.

7. Verfahren zur Steuerung eines Energieverteilungssystems (14), welches derart beschaffen ist, dass es einen Anschluss (16) an ein Wechselstromversorgungssystem (18) sowie eine Mehrzahl an vorgegebenen Lasten (26, 28, 30) mit Energiespeicherfähigkeit umfasst, welche bedarfsweise jeweils mittels einer jeweiligen Schaltvorrichtung (20, 22, 24) elektrisch für die Dauer einer Halbwelle oder einem ganzzahligen Vielfachen davon mit dem Wechselstromversorgungssystem (18) verbindbar sind und im Verbindungsfall mit ihrer Nennleistung betrieben werden, umfasst, beinhaltend folgende Schritte:
• Bereitstellung der Dauer eines jeweiligen Zykluszeitreumes (64, 92, 112) von 1 s bis einigen 100s,
• Bestimmung einer jeweils vorgegebenen Menge an elektrischer Energie mit welcher jede der Lasten (26, 28, 30) im Mittel über den Zykluszeitraum (64, 92, 112) aus dem Wechselstromversorgungssystem (18) zu versorgen ist,
• Ermittlung der daraus resultierenden Dauer (50) eines jeweiligen Ansteuerzeitraumes (48) für jede der Lasten (26, 28, 30),
• iterative Optimierung des Beginns (52) der jeweiligen Ansteuerzeiträume (48) innerhalb des Zykluszeitraumes (64, 92, 112) hinsichtlich eines möglichst konstanten Verlaufes der elektrische Belastung (74, 78 102, 120) des Wechselstromversorgungssystems (18) durch die Lasten (26, 28, 30),
• Ansteuerung der Schaltvorrichtungen (20, 22, 24) entsprechend optimiertem Beginn (46, 52, 58) und Dauer (50, 56, 62) der Ansteuer- (48) beziehungsweise Blockzeiträume (54, 60) ab zeitlichem Beginn des Zykluszeitraumes (64, 92, 112),
**dadurch gekennzeichnet,**
***dass*** *bei der iterativen Optimierung die Möglichkeit der Substitution eines Ansteuerzeitraumes (48) durch mehrere summarisch gleich lange Blockzeiträume (54, 60) berücksichtigt ist und dass in diesem Fall Beginn (52, 58) und Dauer (56, 62) der jeweiligen Blockzeiträume (54, 60) bestimmt werden.*

## Claims

1. Control apparatus (12) for an energy distribution system (14)
• that is embodied in such a manner that it comprises a connection (16) to an alternating current supply system (18) and also comprises a plurality of predetermined loads (26, 28, 30) that have an energy storage capacity and can be connected as required in each case by means of a respective switching device (20, 22, 24) in an electrical manner for the duration of a half-wave or a whole number times said half-wave to the alternating current supply system (18) and said loads are operated at their rated output when connected,
• wherein the control apparatus (12) is provided for the purpose of controlling the respective switching devices (20, 22, 24) in such a manner that the respective loads (26, 28, 30) are supplied from the alternating current supply system (18) for a respective control time period (48) within a predetermined common cycle time period (64, 92, 112) of 1s to a few 100s with a respective predetermined magnitude of electrical energy that is averaged over a time period,
• wherein the control apparatus (12) is provided for the purpose of establishing the start (46) and end of the respective control time periods (48) within the common cycle time period (64, 92, 112) prior to the start of said common cycle time period in such a manner that during the cycle time period (64, 92, 112) the electrical loading (74, 78, 102, 120) on the alternating current supply system (18) by means of the loads (26, 28, 30) is optimized to create a constant as possible loading graph,
**characterized**
**in that** the control apparatus (12) is moreover provided for the purpose of establishing and taking into consideration within the scope of the optimization for at least one load (26, 28, 30) in lieu of a continuous control time period (48) at least two non-continuous block time periods (54, 60) of an equal total duration.

2. Control apparatus according to Claim 1, **characterized in that** said control apparatus is provided for the purpose of taking into consideration when determining the block time periods (54, 60) additional data from the associated load (26, 28, 30) and said data contains the information regarding whether and how many block time periods (54, 60) within the common cycle time period (64, 92, 112) are maximally admissible for the respective load (26, 28, 30).

3. Control apparatus according to Claim 2, **characterized in that** the additional data from the respective load (26, 28, 30) contains the information as to which minimal duration of a block time period (54, 60) is admissible for the respective load (26, 28, 30).

4. Control apparatus according to any one of the preceding claims, **characterized in that** said control apparatus is provided for the purpose of determining and applying control time periods (48) or rather block time periods (54, 60) for a plurality of successive cycle time periods (64, 92, 112) .

5. Control apparatus according to Claim 4 **characterized in that** said control apparatus is provided for the purpose of taking into consideration different predetermined magnitudes of electrical energy for a respective load (26, 28, 30) during successive cycle time periods (64, 92, 112).

6. Control apparatus according to any one of the preceding claims, **characterized in that** said control apparatus is provided for the purpose of controlling semiconductor-based switching devices, in particular thyristor-based switching devices.

7. Method for controlling an energy distribution system (14) that is embodied in such a manner that it comprises a connection (16) to an alternating current supply system (18) and also comprises a plurality of predetermined loads (26, 28, 30) that have an energy storage capacity and can be connected as required in each case by means of a respective switching device (20, 22, 24) in an electrical manner for the duration of a half-wave or a whole number times said half-wave to the alternating current supply system (18) and said loads are operated at their rated output when connected, said method comprising the following steps:
• Providing the duration of a respective cycle time period (64, 92, 112) of 1s to a few 100s,
• Determining a respective predetermined magnitude of electrical energy with which each of the loads (26, 28, 30) is to be supplied from the alternating current supply system (18) averaged over the cycle time period (64, 92, 112),
• Ascertaining the resultant duration (50) of a respective control time period (48) for each of the loads (26, 28, 30),
• Iterative optimization of the start (52) of the respective control time periods (48) within the cycle time period (64, 92, 112) with respect to a constant as possible graph of the electrical loading (74, 78, 102, 120) on the alternating current supply system (18) by means of the loads (26, 28, 30),
• Controlling the switching devices (20, 22, 24) according to the optimized start (46, 52, 58) and duration (50, 56, 62) of the control time periods (48) or rather the block time periods (54, 60) from the starting time of the cycle time period (64, 92, 112),
**characterized**
**in that**, during the iterative optimization, the possibility of substituting a control time period (48) by means of multiple summated equal length block time periods (54, 60) is taken into consideration and in that in this case the start (52, 58) and the duration (56, 62) of the respective block time periods (54, 60) are determined.

## Revendications

1. Dispositif de commande (12) destiné à un système de distribution d'énergie (14),
- qui est conçu de manière à comprendre un raccordement (16) à un système d'alimentation en courant alternatif (18) ainsi qu'une pluralité de charges prédéterminées (26, 28, 30) ayant une capacité de stockage d'énergie, qui peuvent être respectivement électriquement connectées selon les besoins au moyen d'un dispositif de commutation respectif (20, 22, 24) pendant la durée d'une demi-onde ou d'un multiple entier de celle-ci au système d'alimentation en courant alternatif (18) et sont mises en fonctionnement avec leur puissance nominale lorsqu'elles sont connectées,
- dans lequel le dispositif de commande (12) est prévu pour commander les dispositifs de commutation respectifs (20, 22, 24) de manière à ce que les charges respectives (26, 28, 30) soient alimentées pendant une période de commande respective (48) au cours d'une période de cycle commun prédéterminée (64, 92, 112) de 1 seconde à quelques centaines de secondes avec une quantité d'énergie électrique prédéterminée respective moyenne dans le temps provenant du système d'alimentation en courant alternatif (18),
- dans lequel le dispositif de commande (12) est conçu pour fixer le début (46) et la fin de la période de commande respective (48) à l'intérieur de la période de cycle commune (64, 92, 112) avant le début de celle-ci de manière à ce que, pendant la période de cycle (64, 92, 112), la sollicitation électrique (74, 78, 102, 120) du système d'alimentation en courant alternatif (18) par les charges (26, 28, 30) soit optimisée à une évolution aussi constante que possible,
**caractérisé en ce que** le dispositif de commande (12) est en outre conçu pour fixer et utiliser, lors de l'optimisation pour au moins une charge (26, 28, 30), au lieu d'une période de commande (48) associée, au moins deux périodes de blocs non associées (54, 60) ayant une même durée totale.

2. Dispositif de commande selon la revendication 1, **caractérisé en ce qu'**il est conçu pour utiliser lors de la fixation des périodes de blocs (54, 60) des données supplémentaires provenant de la charge associée (26, 28, 30), qui contiennent des informations indiquant le nombre des éventuelles périodes de blocs (54, 60) maximales admissibles à l'intérieur de la période de cycle commune (64, 92, 112) pour la charge respective (26, 28, 30).

3. Dispositif de commande selon la revendication 2, **caractérisé en ce que** les données supplémentaires de la charge associée (26, 28, 30) contiennent l'information indiquant la durée minimale admissible d'une période de bloc (54, 60) pour la charge respective (26, 28, 30).

4. Dispositif de commande selon l'une quelconque des revendications précédentes, **caractérisé en ce qu'**il est conçu pour fixer et utiliser des périodes de commande (48) et, respectivement, des périodes de blocs (54, 60), pour une pluralité de périodes de cycle consécutives (64, 92, 112).

5. Dispositif de commande selon la revendication 4, **caractérisé en ce qu'**il est conçu pour utiliser des quantités prédéterminées différentes d'énergie électrique dans des périodes de cycle consécutives (64, 92, 112) pour une charge respective (26, 28, 30).

6. Dispositif de commande selon l'une quelconque des revendications précédentes, **caractérisé en ce qu'**il est conçu pour commander des dispositifs de commutation à semiconducteurs, et notamment des dispositifs de commutation à thyristors.

7. Procédé destiné à commander un système de distribution d'énergie (14) qui est conçu de manière à ce qu'il comprenne un raccord (16) à un système d'alimentation en courant alternatif (18) ainsi qu'une pluralité de charges prédéterminées (26, 28, 30) ayant une capacité de stockage d'énergie, qui peuvent être respectivement être électriquement connectées selon les besoins au moyen d'un dispositif de commutation respectif (20, 22, 24) pendant la durée d'une demi-onde ou d'un multiple entier de celle-ci, au système d'alimentation en courant alternatif (18) et qui sont mises en fonctionnement avec leur puissance nominale lorsqu'elles sont connectées, comprenant les étapes consistant à :
- prévoir la durée d'une période de cycle respective (64, 92, 112) (48) de 1 seconde à quelques centaines de secondes,
- déterminer une quantité prédéterminée respective d'énergie électrique avec laquelle chacune des charges (26, 28, 30) doit être alimentée en moyenne au cours de la période de cycle (64, 92, 112) par le système d'alimentation en courant alternatif (18),
- obtenir la durée (50) qui en résulte d'une période de commande respective (48) pour chacune des charges (26, 28, 30),
- optimiser de manière itérative le début (52) des périodes de commande respectives (48) à l'intérieur de la période de cycle (64, 92, 112) pour une évolution sensiblement la plus constante possible de la sollicitation électrique (74, 78, 102, 120) du système d'alimentation en courant alternatif (18) par les charges (26, 28, 30),
- commander les dispositifs de commutation (20, 22, 24) d'une manière qui correspond au début optimisé (46, 52, 58) et à la durée (50, 56, 62) des périodes de commande (48) et, respectivement, de blocs (54, 60) à partir du début dans le temps de la période de cycle (64, 92, 112),
caractérisé en ce, lors de l'optimisation itérative, la possibilité de substitution d'une période de commande (48) à une pluralité de périodes de blocs (54, 60) ayant approximativement les mêmes longueurs est utilisée et en ce que le début (52, 58) et la durée (56, 62) des périodes de blocs respectives (54, 60) sont alors déterminés.
